Europäisches Patentamt

European Patent Office

Office européen des brevets

(11) Veröffentlichungsnummer: **0 287 148 B1**

## (12) EUROPÄISCHE PATENTSCHRIFT

(45) Veröffentlichungstag der Patentschrift: **09.09.92**

(21) Anmeldenummer: **88200583.8**

(22) Anmeldetag: **16.03.88**

Verbunden mit 88902466.7/0349561
(europäische
Anmeldenummer/Veröffentlichungsnummer)
durch Entscheidung vom 22.04.91.

(51) Int. Cl.⁵: **H02G 1/08**

(54) **Kabelführungsanordnung.**

(30) Priorität: **18.03.87 DE 8704051 U**
**13.02.88 DE 3804604**

(43) Veröffentlichungstag der Anmeldung:
**19.10.88 Patentblatt 88/42**

(45) Bekanntmachung des Hinweises auf die
Patenterteilung:
**09.09.92 Patentblatt 92/37**

(84) Benannte Vertragsstaaten:
**AT BE CH DE ES FR GB GR IT LI LU NL SE**

(56) Entgegenhaltungen:
**DE-A- 3 217 401**
**DE-A- 3 231 027**
**DE-C- 3 427 788**
**DE-U- 8 704 051**

(73) Patentinhaber: **Kumpf, Ursula, geb. Loritz**
**Im Köpfen 14**
**W-7300 Esslingen(DE)**

(72) Erfinder: **Kumpf, Erich**
**Im Köpfen 14**
**W-7300 Esslingen(DE)**

(74) Vertreter: **Dreiss, Hosenthien & Fuhlendorf**
**Gerokstrasse 6**
**W-7000 Stuttgart 1(DE)**

**Beschreibung**

Die vorliegende Erfindung bezieht sich auf eine Kabelführungsanordnung nach dem Oberbegriff des Anspruchs 1.

Bei einer derartigen, bspw. aus der DE 32 17 401 C2 bekannten Kabelführungsanordnung sind die beiden seitlichen Kabelführungsrohre der Kabelführungseinheit zu beiden Seiten eines durchmessergrößeren mittleren Kabelführungsrohres derart flexibel angelenkt, daß die einzelnen Kabelführungsrohre gleichsam nach Art eines Bündels in das leere Schutzrohr einziehbar sind. Dabei ist der Innenraum des Schutzrohres im wesentlichen ausgefüllt. Hierdurch wird zwar in gewünschter Weise eine Mehrfachnutzung des leeren, d.h. noch nicht mit einem Kabel belegten Schutzrohres erreicht, jedoch besitzen die damit im Schutzrohr geschaffenen Kabelaufnahmeräume einen beim Extrudieren der Kabelführungseinheit festgelegten Querschnitt. Dies bedeutet, daß bereits zum Zeitpunkt der Unterteilung des Schutzrohres in mehrere Kabelaufnahmeräume festliegen muß, welche Kabeldurchmesser die in Zukunft zu verlegenden Kabel maximal besitzen sollen. Dies ist insbesondere dann ein Problem, wenn nachträglich normale Kupferkabel verlegt werden sollen, die es abhängig von der Anzahl der Adernpaare bei Fernmeldekabeln bzw. abhängig von der zu übertragenden Spannung bzw. Leistung bei Energieübertragungskabeln in einer sehr großen Durchmesserbandbreite gibt.

Aufgabe der vorliegenden Erfindung ist es, eine Kabelführungsanordnung der eingangs genannten Art zu schaffen, mit der unter Mehrfachnutzung des Schutzrohres variable Kabelaufnahmeräume geschaffen sind.

Zur Lösung dieser Aufgabe sind bei einer Kabelführungsanordnung der eingangs genannten Art die im Kennzeichen des Anspruchs 1 angegebenen Merkmale vorgesehen.

Durch die erfindungsgemäße Kabelführungsanordnung ist es möglich, neben den beiden im Querschnitt festgelegten Kabelführungsrohren für bspw. Lichtleitkabel, die beiden weiteren Kabelaufnahmeräume an den Durchmesser des oder der jeweils nachträglich zu verlegenden Kabels bzw. Kabel anzupassen. Es ist also bspw. möglich, durch die Unterteilung des Schutzrohres mit Hilfe des Zwischenbodens in den oberen und unteren bzw. je nach Lage des Zwischenbodens im Schutzrohr in den linken und rechten Kabelaufnahmeraum entweder Kabel etwa gleich großen Durchmessers oder Kabel sehr unterschiedlichen Durchmessers einzuziehen. Der Zwischenboden wird sich aufgrund seiner Bewegungsmöglichkeit innerhalb des Schutzrohres entsprechend verschieben lassen und damit die entsprechende Raumgröße für das einzuziehende Kabel zur Verfügung stellen. Auf diese Weise ist es bspw. auch möglich, einen der Kabelaufnahmeräume für ein Kupferkabel mit bis zu 50 bis 60 mm Durchmesser bei den in Deutschland üblicherweise verlegten Schutzrohren mit einem Innendurchmesser von 100 mm zur Verfügung zu stellen. Ein weiterer Vorteil besteht darin, daß diese Kabelaufnahmeräume auch zum Einziehen eines Kabelbündels oder zum Einziehen eines weiteren kabelführungsrohrbündels für dünne Kabel zur Verfügung stehen kann. Somit ist die erfindungsgemäße Kabelführungsanordnung an einen sehr breiten Anwendungsbereich anpaßbar.

Aus der DE 34 27 788 C1 ist es zwar bekannt, die beiden seitlichen Kabelführungsrohre zur Bildung eines Zwischenbodens starr miteinander zur verbinden, jedoch ist es auch bei dieser bekannten Anordnung nur möglich, innerhalb des Schutzrohres zwei Kabelaufnahmeräume mit einem im wesentlichen starren Querschnitt zu bilden. Da dieser bekannte Zwischenboden dazu ausgebildet ist, daß er in ein Schutzrohr, das bereits mit einem Kabel belegt ist, eingeschoben wird, muß der Zwischenboden in Längs- und Querrichtung sehr starr, jedoch um seine Längsachse dennoch zu verwinden sein, damit er sich entlang des bereits liegenden Kabels sich im Schutzrohr schlängeln kann, und er muß aus einem Kunststoff hergestellt sein, der einen relativ geringen Reibungskoeffizienten besitzt, damit ein Einschieben über eine große Länge von mehreren 100 m möglich ist. Dies bedeutet, daß der Zwischenboden aus einem besonderen, relativ teuren Kunststoff und mit einer entsprechenden Wanddicke hergestellt sein muß. Demgegenüber wird der Zwischenboden nach der erfindungsgemäßen Kabelführungsanordnung in ein leeres Schutzrohr eingezogen, so daß an das zu verwendende Material hinsichtlich Reibungskoeffizient und hinsichtlich Steifigkeit und damit an die erforderliche Wanddicke nicht derart hohe Anforderungen gestellt werden müssen. Dies bedeutet, daß der Zwischenboden aus einem billigeren Standardkunststoff oder gar aus im Wege des Recycling erzeugten Kunststoffmaterials wesentlich kostengünstiger hergestellt werden kann.

Die Verbindung zwischen den beiden seitlichen Kabelführungsrohren der Kabelführungseinheit bzw. das hierzu erforderliche Verbindungselement kann in vielfältiger Weise ausgebildet sein. Ein besonders einfaches Verbindungselement ergibt sich durch die Merkmale des Anspruchs 2. Bei einer Ausführung gemäß den Merkmalen des Anspruchs 3 bzw. des Anspruchs 5 ist erreicht, daß das bzw. die nachträglich einzuziehenden Kabel zwischen dem Zwischenboden und dem Schutzrohr längs des Zwischenbodens im Bereich des Verbindungselementes besser gleiten können.

Bei einer Ausgestaltung gemäß den Merkmalen des Anspruchs 6 bzw. denen des Anspruchs 7 ist erreicht, daß mindestens ein weiterer Aufnahmeraum für ein Lichtleitkabel geschaffen ist bzw. die Möglichkeit besteht, eines oder mehrerer derartiger Lichtleitkabel beim Extrudieren des Zwischenbodens gleich mit in diesen bzw. in das Kabelführungsrohr bzw. -röhrchen einzubringen.

Bei einer mit den Merkmalen des Anspruchs 8 versehenen Ausführung ist eine gewünschtenfalls optimale Ausnutzung der zur Verfügung stehenden variablen Kabelaufnahmeräume erreichbar.

Weitere Einzelheiten der Erfindung sind der folgenden Beschreibung zu entnehmen, in der die Erfindung anhand der in der Zeichnung dargestellten Ausführungsbeispiel näher beschrieben und erläutert ist. Es zeigen:

Fig. 1     in einem schematischen Quer- schnitt eine Kabelführungsan- ordnung gemäß einem ersten Ausführungsbeispiel vorliegender Erfindung,

Fig. 2 und 3     Möglichkeiten der Ausnutzung der durch die Kabelführungs- anordnung geschaffenen vari- ablen Kabelaufnahmeräume nach dem Ausführungsbei- spiel der Figur 1 bzw. bei einer Variante hiervon, wobei die bspw. eingezogenen Kabel ebenfalls schematisch dargestellt sind,

Fig. 4A bis D     Varianten von bei der Kabelführungsanordnung nach Fig. 1 verwendbaren Kabelfüh- rungseinheiten, jeweils sche- matisch im Querschnitt,

Fig. 5A und B     in schematischem Querschnitt eine Kabelführungsanordnung gemäß einem zweiten Ausfüh- rungsbeispiel vorliegender Er- findung bzw. einer Variante hiervon und

Fig. 6A und B     in schematischem Querschnitt eine Kabelführungsanordnung gemäß einem dritten Ausfüh- rungsbeispiel vorliegender Er- findung bzw. einer Variante hiervon.

Die in der Zeichnung in mehreren Ausfüh- rungsbeispielen dargestellte Kabelführungsanord- nung 11/1 bis 11/3 dient dazu, beim insbesondere kombinierten nachträglichen Verlegen und Führen von Kupferkabeln oder dgl. und Lichtleitkabeln 13 vorzugsweise für die Kupferkabel 12 in den Abmessungen variable Kabelaufnahmeräume 21, 22 zu schaffen, so daß Kabel 12 unterschiedlicher Durchmesser nachträglich in die Kabelführungsanordnung 11/1 bis /3 eingebracht werden können.

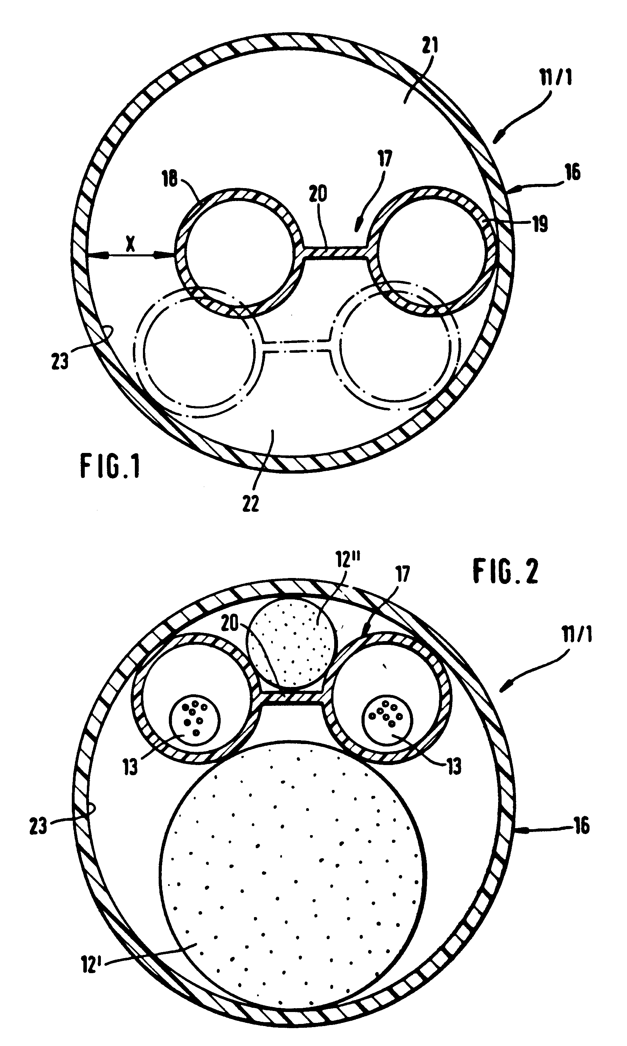

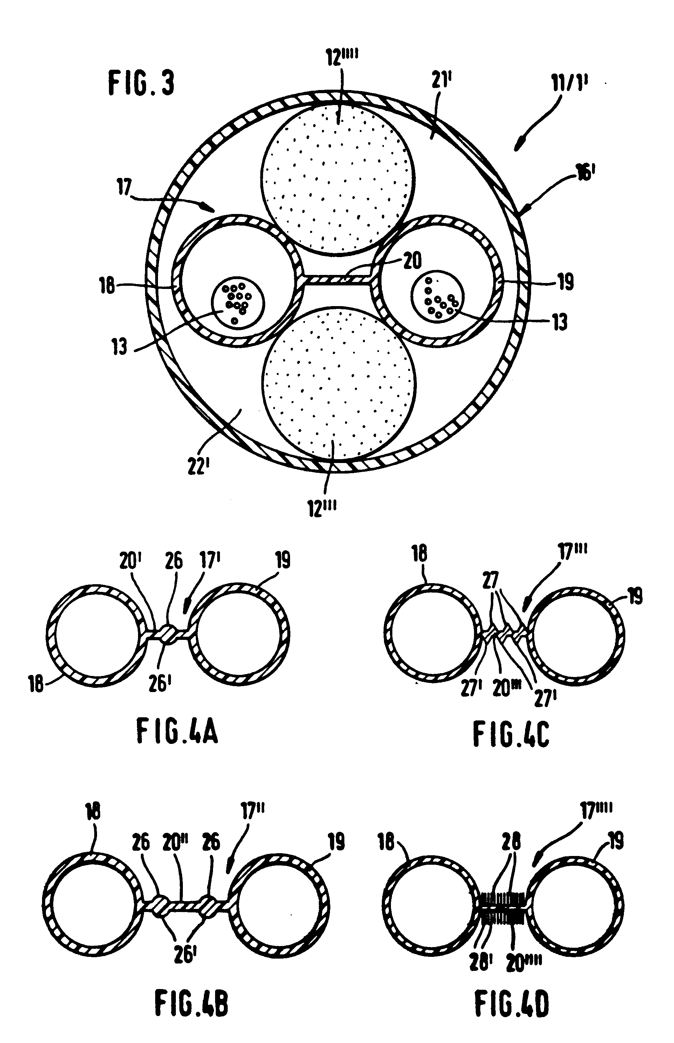

Gemäß dem in Fig. 1 dargestellten ersten Ausführungsbeispiel vorliegender Erfindung besteht die Kabelführungsanordnung 11/1 aus einem Schutz- rohr 16 bestimmten Innendurchmessers. Heutzuta- ge werden ausschließlich Schutzrohre 16 aus Kunststoff, insbesondere unterirdisch einzeln oder in Bündeln verlegt, wobei sie bspw. einen Innendurchmesser von 100 mm aufweisen. Bereits früher verlegte Schutzrohre 16 können aus Beton, Steingut oder dgl. sein. Derartige Schutzrohre 16 sind bspw. für Telefonkabel in Abschnitten von mehreren 10 bis einigen 100 m zwischen Einstiegsschächten verlegt. Zur Mehrfachausnutzung eines solchen Schutzrohres 16 besitzt die Kabelführungsanordnung 11/1 eine Kabelführungseinheit in Form eines Zwischenbodens 17, der in ein leeres, d.h. noch nicht mit einem Kabel belegtes Schutzrohr 16 mit Hilfe eines Zugseiels o. dgl. eingezogen wird.

Der Zwischenboden 17 ist einstückig aus einem Kunststoff, wie bspw. PVC oder aus einem aus Recyclingmaterial gewonnenen Kunststoff extrudiert. Der Zwischenboden 17 besitzt zwei seitliche Kabelaufnahmerohre 18 und 19, die durch einen beidseitig ebenen Steg 20 im wesentlichen starr miteinander verbunden sind. Der Steg 20 in Form eines bandförmigen Mittenbereichs ist im wesentlichen in der mittigen Verbindungsachse der beiden seitlichen Rohre 18, 19 angeordnet. Trotz der in Querrichtung biegesteifen Ausbildung des Zwischenbodens 17 ist dieser in Längsrichtung vorzugsweise derart flexible ausgebildet, daß er aufwickelbar ist, also von einer Trommel abgezogen werden kann, so daß er nach Abschluß des Einziehens in eine Schutzrohr 16 entsprechend abgeschnitten werden kann.

Die Breite des über seine gesamte Länge gleich breiten Zwischenbodens 17 ist um einiges kleiner als der Innendurchmesser des Schutzrohres 16. Zur Darstellung der Abmessungsverhältnisse ist in Figur 1 in ausgezogenen Linien der Zwischenboden 17 in die Mitte des Schutzrohres 16 gesetzt, obwohl selbstverständlich der Zwischenboden, wie strichpunktiert dargestellt, im leeren Schutzrohr in dessen unterem Bereich horizontal oder leicht geneigt aufliegt. Das in Fig. 1 dargestellte Maß X, um das die Breite des Zwischenbodens 17 kleiner ist als der Innendurchmesser des Schutzrohres 16 ist derart gewählt, daß der Zwischenboden 17 innerhalb des Schutzrohres 16 derart bewegbar ist, daß die beiden zwischen dem Zwischenboden 17 und der Schutzrohrinnenwandung 23 gebildeten Kabelaufnahmeräume 21 und 22 sich in einem breiten Bereich ändern können, wie sich bereits aus der strichpunktierten Lage des Zwischenbodens 17 im Schutzrohr 16 der Figur 1 ergibt und dies auch anhand der Fig. 2 und 3 bspw. dargestellt ist. Mit anderen Worten, der Zwischenboden 17 kann durch ein einzuziehendes Kabel 12' in jede beliebige Lage im Schutzrohr 16 gebracht und dadurch gehalten werden, daß er beim Einziehen des Kabels 12' entsprechend ausweicht bzw. auf dem eingezogenen Kabel 12' aufliegt. Das Maß X ist außerdem dadurch bestimmt, daß der Außendurchmesser des kleinsten voraussichtlich einzuziehenden Kabels 12' größer ist als das Maß X, so daß ein Verklemmen eines solchen Kabels 12' im Spalt zwischen der Schutzrohrinnenwandung 23 und dem benachbarten Außenbereich des entsprechenden seitlichen Kabelführungsrohres beim Einziehen des Kabels 12' nicht möglich ist. Bspw. kann das Maß X in einem Bereich zwischen 10 und 25 mm liegen.

Gemäß Fig. 2 ist bei einem bspw. Anwendungsfall in den unteren Kabelaufnahmeraum 22 der Kabelführungsanordnung 11/1 ein Kabel 12' mit einem sehr großen, im wesentlichen dem größten bei Telefonkabeln zur Verfügung stehenden Durchmesser unter den Zwischenboden 17 eingezogen worden, so daß der Zwichenboden 17 ganz nach oben gedrückt ist und sich mit seinen Kabelaufnahmeführungen 18,19 an den oberen Bereich der Schutzrohrinnenwand 23 anlegt. Dadurch ist der obere Kabelaufnahmeraum 21 sehr klein geworden, so daß dieser nur noch ein Kabel 12'' relativ kleinen Durchmessers aufnimmt. Dabei sind in die beiden Kabelführungsrohre 18,19 jeweils ein Lichtleitkabel 13 eingebracht bzw. eingezogen.

Figur 3 zeigt ein anderes Anwendungsbeispiel, gemäß einer Variante 11/1', bei der als Maß X dadurch etwas kleiner ist, daß das Schutzrohr 16' einen kleineren Innendurchmesser aufweist. Bei diesem Anwendungsbeispiel sind die beiden Kabelaufnahmeräume 21' und 22' etwa gleich groß, was dadurch entstanden ist, daß bspw. zunächst in den unteren Kabelaufnahmeraum 22' ein Kabel 12''' mit einem mittelgroßen Durchmesser eingezogen worden ist, so daß ein oberer Kabelaufnahmeraum 21' verbleibt, der ein Kabel 12'''' mit etwa demselben Durchmesser aufnehmen kann. Es versteht, daß die kabelaufnahmeräume 21' und 22' in beliebiger Weise ausgenutzt und innerhalb der Schutzrohrinnenwandung 23' in nahezu beliebiger Weise in ihrer Größe variiert werden können. Wegen des kleineren Maßes X kann diese Variante auch für dünne einzuziehende Kabel verwendet werden.

In der Fig. 4 sind Varianten des Zwischenbodens 17 dargestellt, die in Verbindung mit der Kabelführungsanordnung 11/1 verwendet werden können und deren Breite ebenfalls um das genannte Maß X kleiner ist als der Innendurchmesser des Schutzrohres 16. Bei einer dieser Varianten (Fig. 4A) ist der Steg 20' des Zwischenbodens 17' bspw. mittig und beidseitig mit einer halbkreisförmigen Anformung 26, 26' versehen, so daß sich eine über die gesamte Länge verlaufende kreisförmige Verdickung ergibt. Eine weitere Variante ergibt sich in Form des Steges 20'' in Fig. 4B, dadurch, daß der Verbindungssteg 20'' des Zwischenbodens 17'' mit zwei derartigen über die Breite des Steges verteilt angeordneten Paaren von Verdickungen 26, 26' versehen ist.

Eine weitere Variante in Form des Steges 20''' der Fig. 4C ergibt sich dadurch, daß der Verbindungssteg 20''' des Zwischenbodens 17''' mit oberen und unteren etwa dreieckförmigen Verdickungen 27, 27' angeformt versehen ist, wobei die oberen und unteren Verdickungen 27, 27' jeweils in gleichmäßigem Abstand zueinander angeordnet sind und die Reihe der oberen Verdickungen 27 zur Reihe der unteren Verdickungen 27' versetzt angeordnet ist.

Eine weitere Variante in Form des Verbindungssteges 20'''' ergibt sich dadurch, daß der Verbindungssteg 20'''' des Zwischenbodens 17'''' sowohl an seiner oberen als auch an seiner unteren Seite mit angeformten Lamellen 28, 28' versehen ist, die einander gegenüberliegen und die im Verhältnis zu den Rohren 18, 19 und dem Verbindungssteg 20'''' dünner ausgebildet sind.

Bei allen diesen Varianten der Fig. 4 ergibt sich eine verbesserte Gleitreibung beim Einziehen eines Kabels unterhalb oder oberhalb des Zwischenbodens 17 dann, wenn der Durchmesser dieser Kabel derart ist, daß der Außenmantel des einzuziehenden Kabels 12 mit dem Verbindungssteg 20 in Berührung kommt.

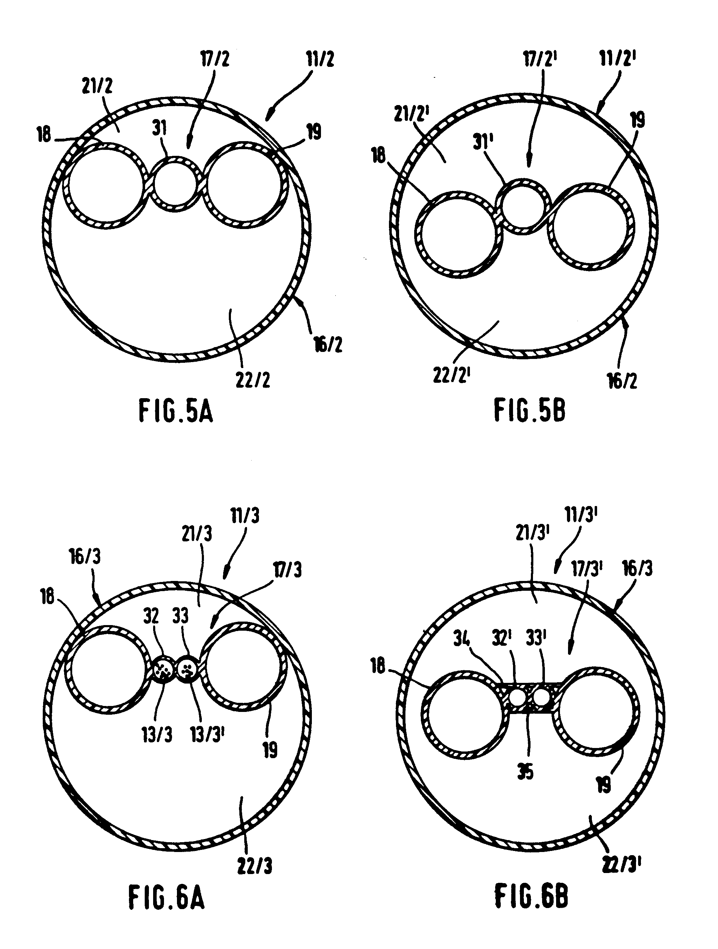

Fig. 5A bzw. 5B zeigt eine Kabelführungsanordnung 11/2 bzw. 11/2', die aus einem Schutzrohr 16/2, dessen Durchmesser gleich oder unterschiedlich zu dem des Schutzrohrs 16 bzw. 16' der Fig. 1 bis 3 sein kann, und aus einem Zwischenboden 17/2 bzw. 17/2', bei dem die beiden seitlichen Kabelführungsrohre 18, 19 in starrer Weise durch ein weiteres Kabelführungsrohr 31 miteinander verbunden sind. Während bei der Variante der Fig. 5A das weitere Kabelführungsrohr 31 gleichachsig mit den beiden seitlichen Kabelaufnahmerohren 18, 19 angeordnet ist, ist bei der Variante der Fig. 5B die horizontale Achse des weiteren Kabelführungsrohres 31' gegenüber den auf einer horizontalen Ebene liegenden Achsen der beiden Rohre 18, 19 nach oben versetzt. Bei beiden Varianten kann in das weitere Kabelführungsrohr 31 bzw. 31' ebenfalls ein Lichtleitkabel eingebracht werden. Bei der Variante nach Fig. 5B kann dabei der untere Kabelaufnahmeraum 22/2' ggf. optimaler ausgenutzt werden.

Bei dem in zwei Varianten in den Fig. 6A und B dargestellten Ausführungsbeispiel besteht die Kabelführungsanordnung 11/3 bzw. 11/3' ebenfalls aus einem Schutzrohr 16/3 und einem Zwischenboden 17/3 bzw. 17/3', bei dem die beiden seitlichen Kabelführungsrohres 18, 19 durch zwei nebeneinander und aneinander liegende zusätzliche Kabelführungsröhrchen 32, 33 starr verbunden sind. Während gemäß Fig. 6A diese beiden Röhrchen 32, 33 in derselben horizontalen Ebene wie die beiden seitlichen Kabelführungsrohre 18, 19 liegen, sind die Röhrchen 32' und 33' gemäß Fig. 6B in ihrer horizontalen Ebene gegenüber der der beiden seitlichen Rohre 18, 19 nach oben versetzt und sind zusätzlich von einer oberen und einer unteren Platte 34, 35 abgedeckt. Diese beiden Varianten des dritten Ausführungsbeispieles der Fig. 6 werden in der Weise hergestellt, daß zusammen mit den Röhrchen 32, 33 bzw. 32', 33' gleich ein Lichtleitkabel 13/3 bzw. 13/3' miteinextrudiert wird, so daß die Röhrchen gleichzeitig ein Teil des Schutzmantels eines solchen Lichtleitkabels bilden.

Es versteht sich, daß auch bei den Ausführungsbeispielen bzw. Varianten der Fig. 5A, B und 6A, B ein entsprechendes Maß X vorgegeben ist, so daß, wie dort auch zeichnerisch angedeutet, variable Kabelaufnahmeräume 21/2, 21/2' und 22/2, 22/2' bzw. 21/3, 21/3' und 22/3, 22/3' gebildet sind.

## Patentansprüche

1. Kabelführungsanordnung zum insbesondere kombinierten Verlegen und Führen von Kupferkabeln od. dgl. und Lichtleitkabeln, bestehend aus einem Schutzrohr (16) aus Beton, Steinzeug, Kunststoff od. dgl. und aus einer in das leere Schutzrohr durch Einziehen einbringbaren Kabelführungseinheit aus Kunststoff, die zwei miteinander verbundene seitliche Kabelführungsrohre (18, 19), insbesondere für Lichtleitkabel aufweist, **gekennzeichnet durch** die Kombination folgender Merkmale:
   1.1 die beiden seitlichen Kabelführungsrohre (18, 19) sind zur Bildung eines Zwischenbodens (17) starr miteinander verbunden;
   1.2 die Breite des Zwischenbodens (17) ist um ein Maß (X) kleiner als der Innendurchmesser des Schutzrohres (16);
   1.3 das Maß (x) ist derart gewählt, daß der Zwischenboden (17) zwar innerhalb des Schutzrohres (16) zu dessen Unterteilung in zwei in weitem Rahmen variablen Kabelaufnahmeräumen (21, 22) bewegbar ist, aber ein nachträglich in einen der variablen Kabelaufnahmeräumen (21, 22) einzulegendes Kabel (12) zwischen Schutzrohrinnenwandung (23) und dem benachbarten Außenbereich des entsprechenden seitlichen Kabelführungsrohres (18, 19) des Zwischenbodens (17) nicht klemmen kann.

2. Kabelführungsanordnung nach Anspruch 1, dadurch gekennzeichnet, daß die beiden seitlichen Kabelführungsrohre (18,19) des Zwischenbodens (17) durch einen ebenen Steg (20) miteinander verbunden sind.

3. Kabelführungsanordnung nach Anspruch 1, dadurch gekennzeichnet, daß die beiden seitlichen Kabelführungsrohre (18,19) des Zwischenbodens (17) durch einen mit einer oder mehreren oben- und/oder untenseitig angeformten Verdickungen (26, 27) versehenen Steg (20) miteinander verbunden sind.

4. Kabelführungsanordnung nach Anspruch 3, dadurch gekennzeichnet, daß die oben- und untenseitig angeformten Verdickungen (27) zueinander versetzt angeordnet sind.

5. Kabelführungsanordnung nach Anspruch 1, dadurch gekennzeichnet, daß die beiden seitlichen Kabelführungsrohre (18,19) des Zwischenbodens (17) durch einen oben- und/oder untenseitig mit etwa senkrecht abstehenden, angeformten Lamellen (28) versehenen Steg (20) miteinander verbunden sind.

6. Kabelführungsanordnung nach Anspruch 1, dadurch gekennzeichnet, daß die beiden seitlichen Kabelführungsrohre (18,19) des Zwischenbodens (17) durch mindestens ein durchmesserkleineres weiteres Kabelführungsrohr (31,32,33) miteinander verbunden sind.

7. Kabelführungsanordnung nach Anspruch 1, dadurch gekennzeichnet, daß die beiden seitlichen Kabelführungsrohre (18,19) des Zwischenbodens (17) durch zwei im Abstand angeordnete Stege (34,35), zwischen denen mindestens zwei weitere Kabelführungsröhrchen (32,33) angeordnet sind, miteinander verbunden sind.

8. Kabelführungsanordnung nach einem der vorhergehenden Ansprüche, dadurch gekennzeichnet, daß das zwischen den beiden seitlichen Kabelführungsrohren (18,19) angeordnete Verbindungselement (20) gegenüber der Verbindungsachse der beiden seitlichen Kabelführungsrohre (18,19) versetzt angeordnet ist.

## Claims

1. A cable guide arrangement for, in particular, combined laying and guiding of copper cables or the like and light-conduction cables, comprising a cable duct (16) of concrete, earthenware, plastics or the like, and a cable guide unit made from plastics material and which may be introduced into the empty cable duct by pulling, comprising two cable guide pipes (18,19) connected side-by-side to one another, especially for light-conducting cables, characterized by the following combination of features:

1.1 the two side cable guide pipes (18,19) are rigidly connected to one another to provide a partition floor (17);

1.2 the width of the partition floor (17) is smaller by an amount (X) than the internal diameter of the duct (16);

1.3 the amount (X) is selected so that the partition floor (17) is movable within the duct (16) to divide the latter into two widely variable cable receiving spaces (21,22), but so as to prevent a cable (12) which is to be subsequently laid in one of the variable cable receiving spaces (21,22) from becoming jammed between the internal wall (23) of the duct and the adjacent outer region of the corresponding side cable guide pipes (18,19) of the partition floor (17).

2. A cable guide arrangement according to Claim 1, characterized in that the two side cable guide pipes (18,19) of the partition floor (17) are connected to one another by a flat web (20).

3. A cable guide arrangement according to Claim 1, characterized in that the two side cable guide pipes (18,19) of the partition floor (17) are connected to one another by a web (20) provided with one or more ribs (26,27) on the upper and/or lower faces thereof.

4. A cable guide arrangement according to Claim 3, characterized in that the ribs (27) formed on the upper and lower faces are arranged in staggered relationship to one another.

5. A cable guide arrangement according to Claim 1, characterized in that the two side cable guide pipes (18,19) of the partition floor (17) are connected to one another by a web (20) provided with perpendicularly projecting fins on the upper and/or lower faces.

6. A cable guide arrangement according to Claim 1, characterized in that the two side cable guide pipes (18,19) of the partition floor (17) are connected to one another by at least one further cable guide pipe (31,32,33) of smaller diameter.

7. A cable guide arrangement according to Claim 1, characterized in that the two side cable guide pipes (18,19) of the partition floor (17) are connected to one another by two spaced apart webs (34,35) between which are arranged at least two further cable guide pipes (32,33).

8. A cable guide arrangement in accordance with any one of the preceding claims, characterized in that the connecting element (20) arranged between the two side cable guide pipes (18,19) is offset relative to the connection axis of the cable guide pipes (18,19).

**Revendications**

1. Dispositif de guidage de câble en particulier pour la pose et le guidage combinés de câbles en cuivre au analogues et de câbles d'éclairage, constitué d'un tube protecteur (16) en béton, en maçonnerie, en matière plastique ou on matériau similaire et en une unité de guidage de câble en matière plastique devant être introduite dans le tube protecteur vida et présentant deux tubes de guidage de câble (18, 19) latéraux reliés l'un à l'autre et destinés en particulier pour les câbles d'éclairage, caractérisé par la combinaison des caractéristiques suivantes :

1.1 les deux tubes latéraux (18, 19) sont reliés rigidement l'un à l'autre afin de former un fond intermédiaire (17) ;

1.2 la largeur de ce fond intermédiaire (17) est inférieure, dans une proportion (X), au diamètre intérieur du tube protecteur (16) ;

1.3 la mesure de (X) est sélectionnée de telle sorte que ledit fond intermédiaire (17) soit mobile à l'intérieur du tube protecteur (16) afin de le diviser en deux espaces (21, 22) d'amplitude très variable destinés à recevoir les câbles, mais en empêchant qu'un câble (12) à poser dans l'un de ces espaces (21, 22) puisse se coincer entre la paroi intérieure du tube protecteur (23) et la zone extérieure adjacente du tube latéral (18, 19) correspondant du fond intermédiaire (17).

2. Dispositif de guidage de câble selon lu revendication 1, caractérisé par le fait que les deux tubes latéraux (18, 19) du fond intermédiaire (17) sont reliés l'un à l'autre par une traverse plane (20).

3. Dispositif de guidage de câble selon la revendication 1, caractérisé par le fait que les deux tubes latéraux (18, 19) du fond intermédiaire (17) sont reliés l'un à l'autre par une traverse (20) munie de surépaisseurs (26, 27) moulées sur elle on haut et/ou en bas.

4. Dispositif de guidage de câble selon la revndication 3, caractérisé par le fait que les surépaisseurs (27) moulées en haut et en bas sont disposées de manière mutuellement décalée.

5. Dispositif de guidage de câble selon la revendication 1, caractérisé par le fait qui les deux tubes latéraux (18, 19) du fond intermédiaire (17) sont reliés l'un à l'autre par une traverse (20) munie de lamelles (28) moulées sur elle en haut et/ou en bas et faisant saillie en direction sensiblement perpendiculaire.

6. Dispositif de guidage de câble selon la revendication 1, caractérisé par le fait que les deux tubes latéraux (18, 19) du fond intermédiaire (17) sont reliés l'un à l'autre par au moins un autre tube conducteur de câble (31, 32, 33) dont le diamètre est plus faible.

7. Dispositif de guidage de câble selon la revendication 1, caractérisé par le fait que les deux tubes latéraux (18, 19) du fond intermédiaire (17) sont reliés l'un à l'autre par deux traverses (34, 35) disposées à une certaine distance l'une de l'autre et entre lesquelles sont disposées au moins deux autres tubes (32, 33) de conduction de câble.

8. Dispositif de guidage de câble selon l'une des revendications précédentes, caractérisé par le fait que l'élément de liaison (20) disposé entre les deux tubes latéraux (18, 19) est décalé par rapport à l'axe de liaison entre les deux tubes latéraux (18, 19) de conduction des câbles.

EP 0 287 148 B1

FIG.1

FIG.2

FIG.3

FIG.4A

FIG.4C

FIG.4B

FIG.4D

FIG.5A

FIG.5B

FIG.6A

FIG.6B